# EUROPEAN PATENT APPLICATION

(11) **EP 2 913 978 A1**
(43) Date of publication of application: **02.09.2015**
(21) Application number: 13859469.2
(22) Date of filing: 19.11.2013
(51) Int. Cl.: H04L 29/08, H04N 21/25, H04N 21/266

(54) **BUSINESS SCHEDULING METHOD AND APPARATUS AND CONVERGENCE DEVICE**

(30) Priority: 30.11.2012 CN 201210505074
(71) Applicant: ZTE Corporation, Shenzhen, Guangdong 518057 (CN)
(72) Inventor: HUANG, Sunliang, Shenzhen Guangdong 518057 (CN); CHEN, Jianye, Shenzhen Guangdong 518057 (CN); WU, Ping, Shenzhen Guangdong 518057 (CN)
(74) Representative: Benson, Christopher
(86) International application number: PCT/CN2013/087384
(87) International publication number: WO 2014/082538

(57) **Abstract**

A business scheduling method and apparatus and a convergence device are provided. The method is applied to a convergence device comprising a CDN business unit providing a content delivery service and a network business unit providing network access and bearing services, wherein the CDN business unit comprises a business processor and an internal storage device, and the CDN business unit is connected to an external storage device. The method comprises: dividing business processor resources and storage resources in the CDN business unit into multiple business service unit groups, and allocating the business processor resources and the storage resources in the internal storage device or the external storage device to each business service unit group; and when the CDN business unit receives an application visit request from a user, scheduling the application visit request of the user to one business service unit group of the multiple business service unit groups according to the attribute of the user, the visited content, the application type or the source IP address and/or port number.

## Description

### Technical Field

The present invention relates to the communication network technology field, and in particular, to a business scheduling method and apparatus and a convergence device.

### Background of the Related Art

The fast development of Internet business, and especially the development of the video business, makes the business provider need to provide a large amount of Content Delivery Network (CDN) services, in order to promote the service quality of the business, therefore bringing the large scale development of the CDN.

Meanwhile, in order to ensure the user experience, the telecommunication operator promotes the bandwidth constantly as well, or provides the service of improving the bandwidth on-demand by adopting the Bandwidth on Demand (BoD) mode to improve the network quality of the user and ensure the user experience.

Through our analysis, the service quality of the user service needs to be guaranteed from two aspects, the content and the network, and this needs the CDN and the network device to simultaneously assure the Internet applications of the user. Therefore, we have proposed to form a device with a new type by merging the CDN content delivery node with the network device, which can make good coordination between the content delivery of the CDN and the bandwidth assurance of the network and can guarantee the content of the user and the network quality at the same time, thus being able to guarantee the user's business experience very well.

However, because it is limited by the device integration level,content delivery the storage capacity is limited by a certain restriction when a CDN content delivery node is realized within the convergence device, where the expansion is needed and the external storage is needed. Therefore, the realization of the convergence device is faced with the problem of uniform integration with the external storage and also the coordination and distribution and scheduling of the business.

### Content of the Invention

The embodiment of the present invention provides a business scheduling method and apparatus and a convergence device, which can solve the problem that the convergence device integrates the internal and external storage resources and the business processing ability and uniformly performs the scheduling and processing to the application of the user.

The embodiment of the present invention provides a business scheduling method, applied to a convergence device comprising a content delivery network (CDN) business unit providing a content delivery service and a network business unit providing network access and bearing services, wherein,
the CDN business unit comprises a business processor, an internal storage device and an external storage device, and the CDN business unit is connected to the external storage device;
the method comprises:
dividing business processor resources and storage resources in the CDN business unit into multiple business service unit groups, and allocating the business processor resources and the storage resources in the internal storage device or the external storage device to each business service unit group; and
when the CDN business unit receives an application visit request from a user, scheduling the application visit request from the user to one business service unit group of the multiple business service unit groups according to attribute of the user, visited content, an application type or a source internet protocol (IP) address and/or port number. Alternatively, the CDN business unit is connected with the external storage device through an internet small computer system interface (iSCSI interface), a fiber channel (FC) interface or an Ethernet fiber channel (FCoE) interface.

Alternatively, the method further comprises:
after scheduling the application visit request of the user to one business service unit group of the multiple business service unit groups, determining a business service unit providing service for the user in the business service unit group according to a scheduling algorithm;
wherein, the business service unit comprises: a business processing unit in the business processor, and a storage unit in the internal storage device or the external storage device.

Alternatively, the dividing business processor resources and storage resources in the CDN business unit into multiple business service unit groups, and allocating the business processor resources and the storage resources in the internal storage device or the external storage device to each business service unit group comprises:
dividing the business processor resources and the storage resources in the CDN business unit into a first business service unit group and a second business service unit group, allocating internal storage resources for the first business service unit group, allocating external storage resources for the second business service unit group, and allocating more business processor resources for the first business service unit group than those for the second business service unit group.

Alternatively, scheduling the application visit request from the user to one business service unit group of the multiple business service unit groups according to attribute of the user, visited content, an application type or a source internet protocol (IP) address and/or port number comprises:
when the CDN business unit receives the application visit request from the user, scheduling an application visit request of a user with a higher priority into the first business service unit group according to a preset priority of the attribute of the user, visited content, application type, or source IP address and/or port number.

The embodiment of the present invention further provides a business scheduling apparatus, applied to a convergence device comprising a content delivery network (CDN) business unit providing a content delivery service and a network business unit providing network access and bearing services, wherein, the apparatus comprises: a business access unit and a judging and scheduling unit;
the business access unit is configured to: receive an application visit request of a user, and send the application visit request of the user to the judging and scheduling unit; and
the judging and scheduling unit is configured to: divide business processor resources in the CDN business unit and storage resources in an internal storage device and an external storage device into multiple business service unit groups, and allocate the business processor resources and the storage resources in the internal storage device or the external storage device to each business service unit group; and when an application visit request of the user is received, schedule the application visit request of the user to one business service unit group of the multiple business service unit groups according to attribute of the user, visited content, an application type or a source internet protocol (IP) address and/or a port number. Alternatively, the judging and scheduling unit is configured to: divide the business processor resources and the storage resources in the CDN business unit into a first business service unit group and a second business service unit group, allocate internal storage resources for the first business service unit group, allocate external storage resources for the second business service unit group, and allocate more business processor resources for the first business service unit group than those for the second business service unit group.

Alternatively, the judging and scheduling unit is configured to: when the application visit request of the user is received, schedule an application visit request of a user with a higher priority into the first business service unit group according to a preset priority of the attribute of the user, visited content, application type, or source IP address and/or port number.

Alternatively, the judging and scheduling unit is further configured to: after scheduling the application visit request of the user to one business service unit group of the multiple business service unit groups, determine a business service unit providing service for the user in the business service unit group according to a scheduling algorithm;
wherein, the business service unit comprises: a business processing unit in the business processor, and a storage unit in the internal storage device or the external storage device.

Alternatively, the business access unit is further configured to: provide a content delivery business to the user by adopting a uniform outgoing service address and establish an application link with a user terminal.

The embodiment of the present invention further provides a convergence device, comprising: a network business unit, a content delivery network (CDN) business unit and a main switching unit; wherein:
the network business unit is configured to: provide network access and bearing services to a user;
the CDN business unit is configured to: provide a content delivery service to the user;
the main switching unit is configured to: control and switch data; and
the CDN business unit comprises the business scheduling apparatus as described in any one of claims 6 to 10.

Alternatively, the CDN business unit further comprises: a user state maintenance unit; and
the user state maintenance unit is configured to: maintain a connection state and a content delivery state of a user, comprising information about attribute of the user, visited content and content delivery state which the user is in.

In the scheme of the present application, by uniformly deploying the business processing resources and the storage resources in the CDN business unit in combining with the external storage, the convergence device and the external storage are integrated very well, and a uniform outgoing service node is formed; and at the same time, a high-efficiency business bearing and scheduling method is provided, which realizes flexible provision of the business, provides differentiate service to the user and optimizes the efficiency of the business scheduling.

### Brief Description of Drawings

FIG. 1 is a network deployment diagram of a CDN and network convergence device according to an embodiment of the present invention;
FIG. 2 is a structure diagram of device composition of a CDN and network convergence device according to an embodiment of the present invention;
FIG. 3 is a logic framework diagram of internal organization and business scheduling of a CDN business unit according to an embodiment of the present invention;
FIG. 4 is a composition framework diagram of a first business service unit group according to an embodiment of the present invention;
FIG. 5 is a composition framework diagram of a second business service unit group according to an embodiment of the present invention;
FIG. 6 is a diagram of a business scheduling method based on an access URL of a user of a CDN and network convergence device according to an embodiment of the present invention;
FIG. 7 is a diagram of a business scheduling method based on a user type of a CDN and network convergence device according to an embodiment of the present invention;
FIG. 8 is a diagram of a business scheduling method based on a source IP address and port number of a user of a CDN and network convergence device according to an embodiment of the present invention;
FIG. 9 is a diagram of a business scheduling method based on an application type of a user of a CDN and network convergence device according to an embodiment of the present invention.

### Preferred Embodiments of the Present Invention

The present embodiment provides a business scheduling system of a content delivery node and network convergence device, including the following contents.

The CDN content delivery node is merged with the network business control device, and the CDN content distribute node is used as the component (which can adopt the form of the business board card) of the network device for the uniform deployment. That convergence device adopts the uniform center management platform to manage.

The CDN component of the convergence device includes the business processing unit and the storage unit, and can include the external storage device at the same time; and the CDN business unit realizes the connection with the external storage device through the iSCSI interface, the FC interface and the FCoE interface, to form a uniform outgoing content delivery service node.

For better integrating the resources of the device, improving the resource utilization efficiency and providing the differentiated services, the organization of the resources and the process of the business are realized by adopting the mode of the business service unit group, which overall can be divided into the first business service unit group and the second business service unit group; in principle, the first business service unit group is used for providing the service of the high priority; and the second business service unit group is used for providing the service of the normal level.

The first business service unit group adopts the business processor in the CDN business unit, and adopts the high-speed internal storage in the CDN business unit (high-speed memory and high-speed hard disk).

The second business service unit group adopts the business processor in the CDN business unit, and adopts the storage resources in the external storage device.

The CDN business unit maintains the state and attribute information of the user, which is convenient to perform the corresponding judgment and control according to the user and the business visited by the user, and the application used by the user.

The CDN business unit adopts the uniform outgoing service address to provide the content delivery service to the user; and interact with each business service unit by adopting the internal address internally.

The visit request of the user is accessed to the CDN business unit, and the judging and scheduling unit in the CDN business unit judges the level of the priority according to the attribute of the user and the visited content, and determines to schedule to the first business service unit group or the second business service unit group; and then determines the business service unit in the group according to the scheduling algorithm (such as, hash algorithm).

It can be scheduled according to a Uniform Resource Locator (URL) visited by the user. The judging and scheduling unit captures the URL visited by the user and judges whether it is the high level content (such as, the charged video, the content of the member area and the hot content, etc.); if it is the high grade content, then it is scheduled to the first business service unit group; and if it is the normal grade content, then it is scheduled to the second business service unit group.

It can be scheduled according to the attribute and type of the user. The judging and scheduling unit judges according to the type of the user (such as, member, nonmember, high grade member, etc.), and it is scheduled to the first business service unit group if the user is a high grade customer, and it is scheduled to the second business service unit group if the user is the normal grade customer.

It can be scheduled according to the source IP address and/or port number of the user. In the particular application scene, different user groups can be divided into different IP address fields, and therefore the priority level of the user can be distinguished according to different IP address fields. The judging and scheduling unit judges according to the source IP address and/or port number of the user, and it is scheduled to the first business service unit group if it is a high grade customer, and it is scheduled to the second business service unit group if it is the normal grade customer.

It can be scheduled according to the application type. Different applications have different characteristics, and have different requirements on the network quality and content delivery quality, and so distinction can be made based on the difference of applications to provide different services.content delivery The judging and scheduling unit judges according to the application type of the user, and it is scheduled to the first business service unit group if it is a high grade application, and it is scheduled to the second business service unit group it is the normal grade application.

The present embodiment provides a business scheduling method of a content delivery node and a network convergence device, wherein, the convergence device merges the CDN content delivery node and the network device together and can provide the network access bearer service and the CDN content delivery business for the user at the same time.

The above-mentioned method can have the following characteristics: the convergence device includes a main control / switching unit, a network business unit, and a CDN business unit, which are combined by the form of loose coupling, and there are corresponding internal interfaces between each other for interaction, to realize forwarding the flow and the interaction in the control plane.

The above-mentioned method can have the following characteristics: the CDN business unit includes a business processor, an internal storage and external storage, to form the uniform content delivery business node.

The above-mentioned method can have the following characteristics: the connection of the CDN business unit to the external storage can adopt the iSCSI interface, the FC interface or the FCoE interface.

The above-mentioned method can have the following characteristics: the CDN business unit integrates the hardware resources including the processor resources, the internal storage resources, and the external storage resources, etc. by adopting the mode of the business service unit; a uniform outgoing service node is formed and the service is provided to the outside by adopting the uniform mode.

The above-mentioned method can have the following characteristics: multiple business service units can form the business service unit group; and can form multiple groups in the system.

The above-mentioned method can have the following characteristics: two groups are formed in the system, which are the first business service unit group and the second business service unit group respectively.

The first business service unit group provides the high priority service as the high priority group; and the second business service unit group provides the normal service as the normal group.

The above-mentioned method can have the following characteristics: the first business service unit group allocates the high-quality hardware resources, allocates more business processor resources, and allocates the internal storage resources (high-speed hard disk and memory) on the CDN business unit.

The above-mentioned method can have the following characteristics: the second business service unit group allocates the normal hardware resources, allocates a certain amount of business processor resources, and allocates the external storage space.

The above-mentioned method can have the following characteristics: the CDN business unit has the user state maintenance unit which maintains the connection state and the content delivery state of the user including information such as the attribute of the user, the content visited by the user and the content delivery state which the user is in, etc.

The above-mentioned method can have the following characteristics: the CDN business unit adopts the uniform outgoing service address to provide the service to the user, and deploys the uniform business access unit; and user terminals uniformly establish the application link with the business access unit.

The above-mentioned method can have the following characteristics: the judging and scheduling unit realizes the scheduling of the user business according to the information, such as the attribute of the user, the visited content, etc.

The above-mentioned method can have the following characteristics: the business scheduling can be divided into two steps: judging the priority of the business visit by the user first to confirm the corresponding business service unit group; and then realizing the scheduling within the group according to the scheduling algorithm to confirm the business service unit providing the service.

The above-mentioned method can have the following characteristics: it can be scheduled according to a Uniform Resource Locator (URL) visited by the user, the judging and scheduling unit captures the URL visited by the user and judges whether it is the high level content (such as, the charged video, the content of the member area and the hot content, etc.); if it is the high grade content, then it is scheduled to the first business service unit group; and if it is the normal grade content, then it is scheduled to the second business service unit group.

The above-mentioned method can have the following characteristics: it can be scheduled according to the attribute and type of the user, the judging and scheduling unit judges according to the type of the user (such as, member, nonmember, high grade member, etc.); if it is a high grade customer, then it is scheduled to the first business service unit group; if it is the normal grade customer, then it is scheduled to the second business service unit group.

The above-mentioned method can have the following characteristics: it can be scheduled according to the source IP address and/or port number of the user; the judging and scheduling unit judges according to the source IP address and/or port number of the user; if it is a high grade customer, then it is scheduled to the first business service unit group; if it is the normal grade customer, then it is scheduled to the second business service unit group.

The above-mentioned method can have the following characteristics: it can be scheduled according to the application type; the judging and scheduling unit judges according to the application type of the user; if it is a high grade application, then it is scheduled to the first business service unit group; if it is the normal grade application, then it is scheduled to the second business service unit group.

In order to be convenient to explain the embodiment of the present invention, the implementation of the technical scheme of the embodiment of the present invention is described in detail with reference to the accompanying drawings hereinafter. It should be illustrated that, in the case of not conflicting, the embodiments in the present application and features in these embodiments can be combined with each other.

In one embodiment of the present invention, it is considered to merge the CDN and the network device to form a new convergence device, which makes great coordination of the guarantee of CDN content delivery and the guarantee of the network bandwidth, thus being able to guarantee the content and the network quality for the user at the same time and then guaranteeing the business experience of the user.

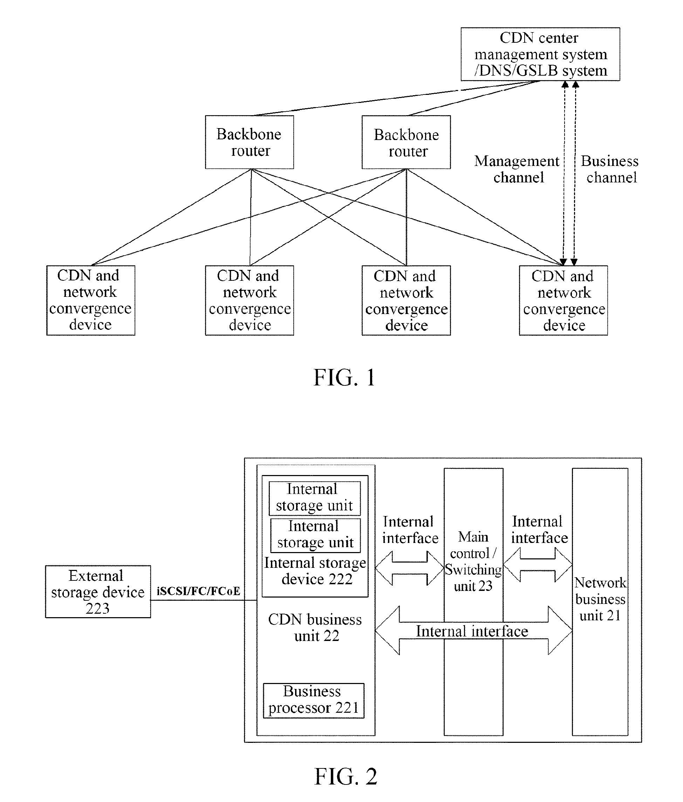

FIG. 1 shows a network deployment diagram of a CDN and network convergence device according to an embodiment of the present invention. Combining with shown in FIG. 1, in view of the system, the CDN and the network convergence device can take the distributed deployment, and the CDN center management system can be used to implement the uniform management and scheduling, and to implement the uniform content management, business monitoring, network management, Domain Name Server (DNS) analysis and the resources scheduling and the load balancing, etc.

The CDN center management system adopts the mode of centralized deployment, which is uniformly deployed with the DNS, the resources scheduling and the load balancing system (that is, the Global Server Load Balancing (GSLB) system), to realize the management and maintenance, the business adaptation of the CDN component in the CDN and network convergence device as well as the resource scheduling in the current area; and the CDN center management system can be deployed as the independent system, and also can be merged with the network management system of the convergence device as well, as the component of the network management system to be deployed with the network management system uniformly.

The convergence device has merged the CDN function and the network function, adopts the CDN component as the content delivery node to provide the content delivery service for the user; and provides the network access and bearer services to the user by adopting the network component.

The management channel and the business channel are established between the CDN component and the CDN center management system, and the management channel is adopted to realize the daily maintenance management of the network, the monitoring of the device, etc.; and the business channel is adopted to realize the content issuing and the business information interaction, etc.

In view of the networking, the CDN can be merged with the devices, such as, the core router, the Broadband Remote Access Server/Business Router (BRAS/SR), the switch, and the Packet Data Serving Node/GatewayGeneral Packet Radio Service (GPRS) Serving Node (PDSN/GGSN) on the network, etc. Because the BRAS/SR and the PDSN/GGSN are the network business control point device and have the network state information of the user, it is recommended to merge the CDN device with the BRAS/SR and the PDSN/GGSN device, thus realizing the co-operation of the CDN user state and the network user state; it can realize the double guarantee of the application content and network quality based on the user through the co-operation of the user state, thus improving the user experience.

FIG. 2 shows a structure diagram of device composition of a CDN and network convergence device according to an embodiment of the present invention. The CDN and network convergence device in the present embodiment includes the network business unit 21, the CDN business unit 22, and the main control / switching unit 23.

Wherein, the network business unit 21 is mainly used for providing the network access and bearer services for the user.

The CDN business unit 22 is mainly used for providing the content delivery service for the user; and
the main control / switching unit 23 includes a main control unit and an switching unit of the device, used for the centralized management and control of the device and the high speed switching of the data.

In order to satisfy the fast and high efficient information processing and signaling interaction and the fast forwarding of the flow within the device, there are corresponding internal interfaces among the network business unit 21, the CDN business unit 22 and the main control / switching unit 23.

As shown in FIG. 2, in the present embodiment, the CDN business unit 22 includes the business processor 221, the internal storage device222 and the external storage device223, wherein, the internal storage device or the external storage device can include multiple storage units. Wherein, the business processor and the internal storage device can be inserted on the machine frame of the device by adopting the shape of the business processing board. Because of the limitations of the integrated level of the device, the memory capacity of the CDN business unit is limited, therefore, the expansion of the capacity is performed by adopting the external storage; the CDN business board can be connected with the external storage device by adopting the iSCSI interface, the FC interface or the FCoE interface, which makes the CDN business board be able to visit the external storage device very conveniently. The CDN business unit (including the business processor, the internal storage equipment in the form of board card and the external storage device) forms the uniform outgoing service node through well integrating the convergence device and the external storage.

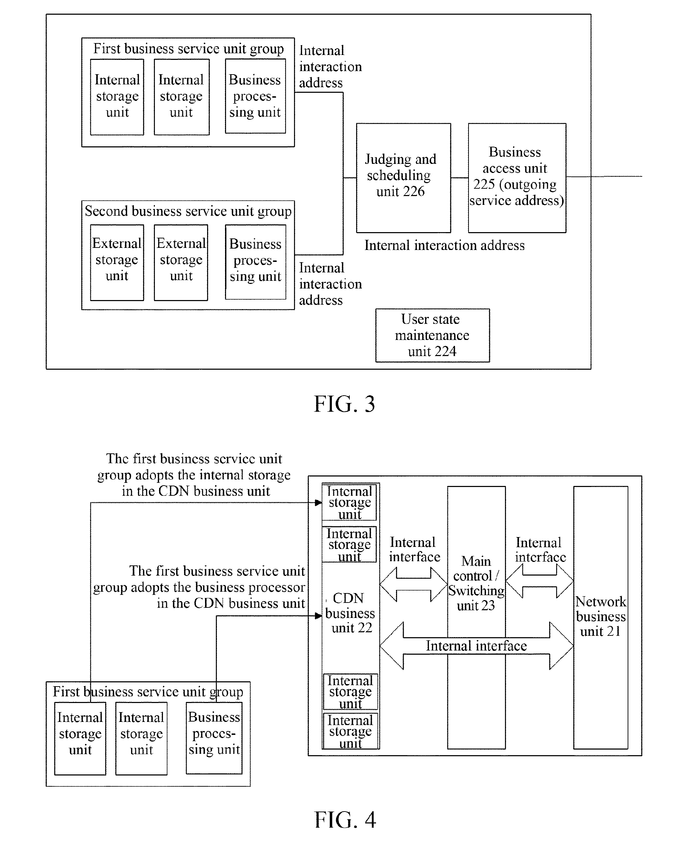

FIG. 3 shows a logic framework diagram of internal organization and business scheduling of a CDN business unit 22 according to an embodiment of the present invention.

The CDN business unit 22 integrates the internal business processor resources, the internal storage resources and the external storage resources uniformly, to provide the business processing and the content delivery service in the form of the business service unit.

At the same time, multiple business service units can form the business service unit group, and can even more form multiple business service unit groups; different groups can be distinguished to be with high or low priority according to the difference of the occupied business processor resources and the storage resources.

In the present embodiment, it is divided into the first business service unit group and the second business service unit group. The first business service unit group is a high priority group, can occupy more business processor resources, and adopts the surplus storage space on the board card and the internal storage hard disk on the board card, of which the processing efficiency is high, used for providing high grade service; and the second business service unit group adopts the external storage space, used for providing the normal grade service.

In addition, the user state maintenance unit 224 is also configured in the CDN business unit 22, used for maintaining the content state machine with the user. The content state machine records the information, such as, the application link condition of the user, the attribute of the user, the visited application content, and the using state of the content, etc., which is convenient for the CDN business unit 22 to manage, control and schedule the user and the application visiting service of the user.

In addition, the business access unit 225 is also configured in the CDN business unit 22, used for issuing the service address to outside uniformly, and establishing the application link with the user client; and adopts the internal interaction address to perform the intercommunication internally, which is convenient for the deployment for the business and the realization of the priority scheduling and the load balancing scheduling.

In addition, the judging and scheduling unit 226 is also configured in the CDN business unit 22, used for performing the scheduling and the load balancing according to the information, such as, the attribute of the user and the content visited by the user, etc. The implementation procedure can be divided into two stages. In first stage, the priority is judged first according to the information, such as the attribute and URL of the user, etc., and it is scheduled to the corresponding business service unit group; in the second stage, then the final business service unit is confirmed according to the scheduling algorithm within the group. When the final business service unit is scheduled and confirmed, the judging and scheduling unit 226 needs to maintain the corresponding relationship of the link currently visited by the user and the selected business service unit for the subsequent content interaction until the end that the current visit of the user is over.

On the basis of the above-mentioned logic framework, the present embodiment further provides a high-efficiency business scheduling method, in order to realize flexibly providing the business, providing the differentiate service to the user, and optimizing the efficiency of the business scheduling. The business scheduling steps are described as follows.

In step S 1, the user establishes the application link with the outgoing service address of the business access unit, or logs in the system.

In step S2, the user state maintenance unit obtains the information, such as the attribute information of the user and the visited content, the URL.

In step S3, the judging and scheduling unit judges the priority of the user according to the information, such as the attribute of the user and the URL, and confirms the business service unit group to which the user belongs; and then confirms the business service unit providing the content delivery service for the user according to the service scheduling algorithm within the group.

In step S4, the business visit process is that:
the business access unit receives the user visit request, and requests the content to the selected business service unit through the internal interaction address; and
the business service unit checks its own buffer; if there is the buffer corresponding to the content, then it can directly return the required content to the business access unit by adopting the internal interaction address; if there is no corresponding buffer, then it needs to obtain from the superior node or source station, and then returns the required content to the business access unit.

The business access unit receives the content data transmitted by the business service unit through the internal interaction address, and then sends to the user through the outgoing service address.

FIG. 4 shows a composition framework diagram of a first business service unit group according to an embodiment of the present invention. The composition of the business service unit needs the corresponding business processor resources to form the business processing unit, needs the corresponding memory space, and needs the corresponding storage space. The first business service unit group is used for providing the high grade service, therefore more processor resources and faster and higher efficient storage equipment are allocated for it. Therefore, the business processing unit of the first business service unit group adopts the business processor in the CDN business unit, and can be allocated with the surplus memory space on the CDN business unit as the temporary internal storage, and allocated with the high-speed hard disk on the CDN business unit as the storage space.

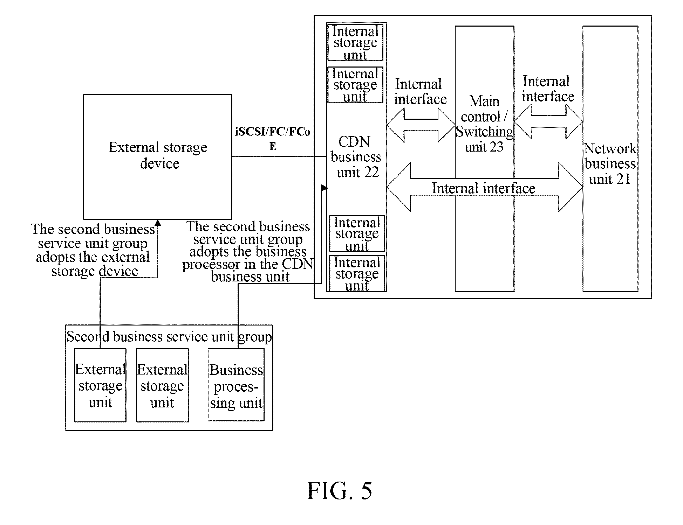

FIG. 5 is a composition framework diagram of a second business service unit group according to an embodiment of the present invention. The composition of the business service unit needs the corresponding business processor resources to form the business processing unit, needs the corresponding memory space, and needs the corresponding storage space. The second business service unit group is used for providing the normal service, therefore the priority is lower than the priority of the first business service unit group during the allocation of processor resources and the memory resources. And at the same time, the storage space of the external storage device is allocated for the second business service unit group.

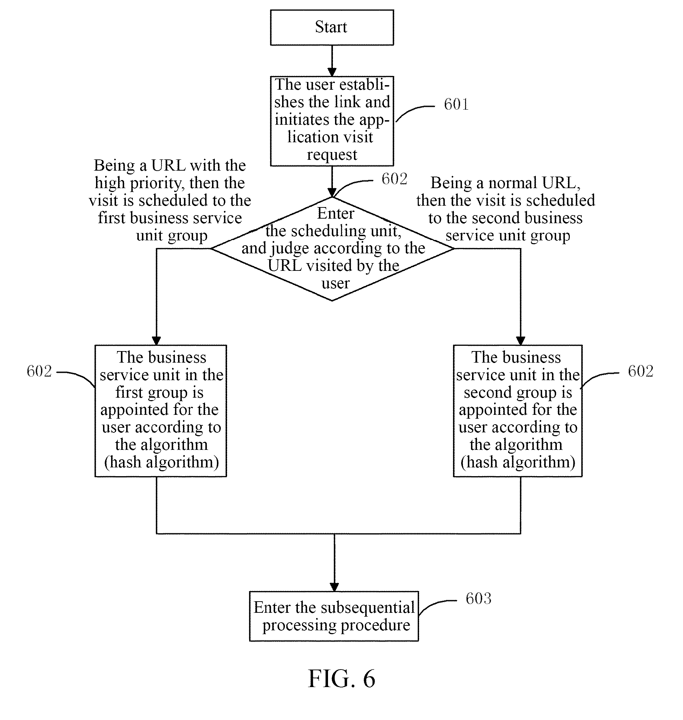

FIG. 6 shows a business scheduling method based on the URL accessed by a user of a CDN and network convergence device according to an embodiment of the present invention. The operation steps are described as follows.

In step 601, after the user establishes the application link with the business access unit of the CDN business unit, the application visit request is initiated.

Wherein, the application visit request includes the URL information of the request content, and the application may have the charged content, the free content, the member exclusive content, and the normal content, etc.

In step 602, the judging and scheduling unit performs judgment to the URL of the content visited by the user according to the predetermined strategy. If it is the URL with the high priority, then the visit is scheduled to the first business service unit group, and then the business service unit is appointed in the group for the user in the first business service unit group, according to its own scheduling algorithm, such as, the hash algorithm; if it is belonged the URL with normal priority, then it is judged that the one visited by user is the normal URL, and the visit is scheduled to the second business service unit group, and then the business service unit is appointed in the group for the user in the second business service unit group, according to its own scheduling algorithm, such as, the hash algorithm.

In step 603, after the business service unit providing the service for the user is confirmed, the subsequent business processing procedure is entered.

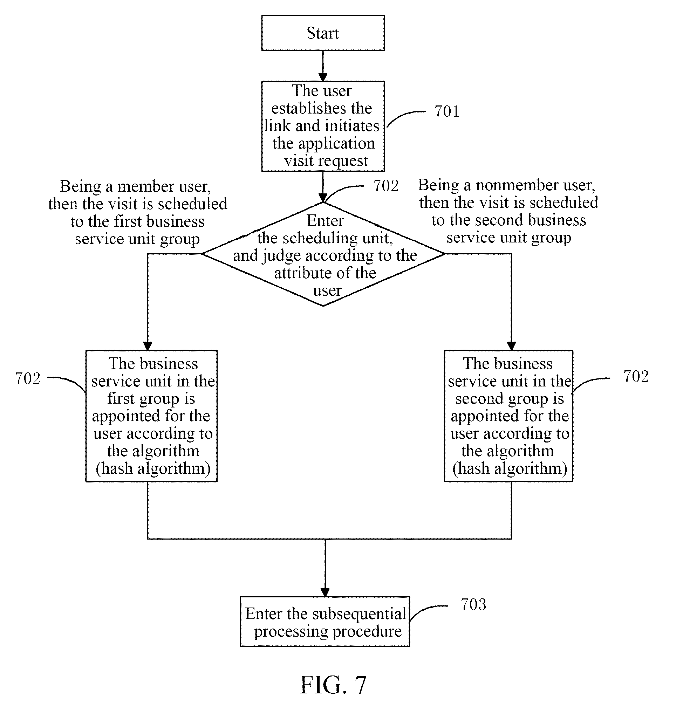

FIG. 7 shows a diagram of a business scheduling method based on a user type of a CDN and network convergence device according to an embodiment of the present invention. The operation steps are described as follows.

In step 701, after the user establishes the application link with the business access unit of the CDN business unit, the application visit request is initiated.

Wherein, after the user establishes the application link with the business access unit of the CDN business unit or when it logs in the system, the system can obtain the attribute information of the user, and can distinguish the type of the user, for example, the user is the member user, the paying user, etc.

In step 702, when the user initiates the application visit request, the judging and scheduling unit performs judgment according to the type of the user. If it is the user with the high priority, then the visit is scheduled to the first business service unit group, and then the business service unit in the group is appointed for the user according to its own scheduling algorithm, such as, the hash algorithm in the first business service unit group; if it is the user with normal priority, then it is judged that the user is the normal user, and the visit is scheduled to the second business service unit group, and then the business service unit in the group is appointed for the user according to its own scheduling algorithm, such as, the hash algorithm in the second business service unit group.

In step 703, after the business service unit providing the service for the user is determined, the subsequent business processing procedure is entered.

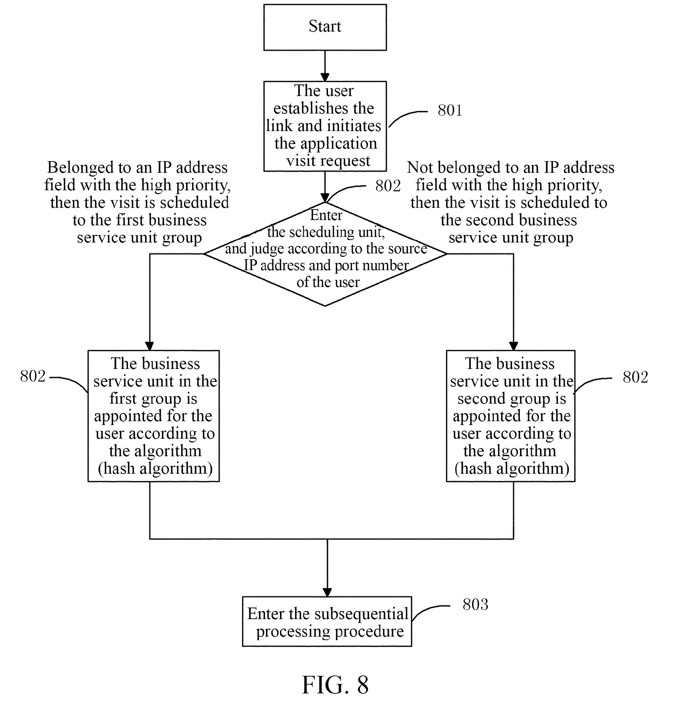

FIG. 8 is a diagram of a business scheduling method based on a source IP address and port number of a user of a CDN and network convergence device according to an embodiment of the present invention. The operation steps are described as follows.

In step 801, after the user establishes the application link with the business access unit of the CDN business unit, the application visit request is initiated.

In the particular network and business deployment scene, different user types and business types will be distinguished according to the IP address fields, for example, the broadband Internet user adopts one address pool, the Internet Protocol Television (IPTV) business adopts one address pool, and the Voice over Internet Protocol (VOIP) business adopts one address pool, etc.; therefore, the priority levels can be confirmed according to the source IP addresses of the users.

In step 802, when the user initiates the application visit request, the judging and scheduling unit performs judgment according to the source IP address and/or port number of the user; if it belongs to the IP address field with the high priority, then the visit is scheduled to the first business service unit group, and then the business service unit in the group is appointed for the user according to its own scheduling algorithm, such as, the hash algorithm in the first business service unit group; if it belongs to the IP address field with normal priority, then it is judged that the user is the normal user, and the visit is scheduled to the second business service unit group, and then the business service unit in the group is appointed for the user according to its own scheduling algorithm, such as, the hash algorithm in the second business service unit group.

In step 803, after the business service unit providing the service for the user is confirmed, the subsequent business processing procedure is entered.

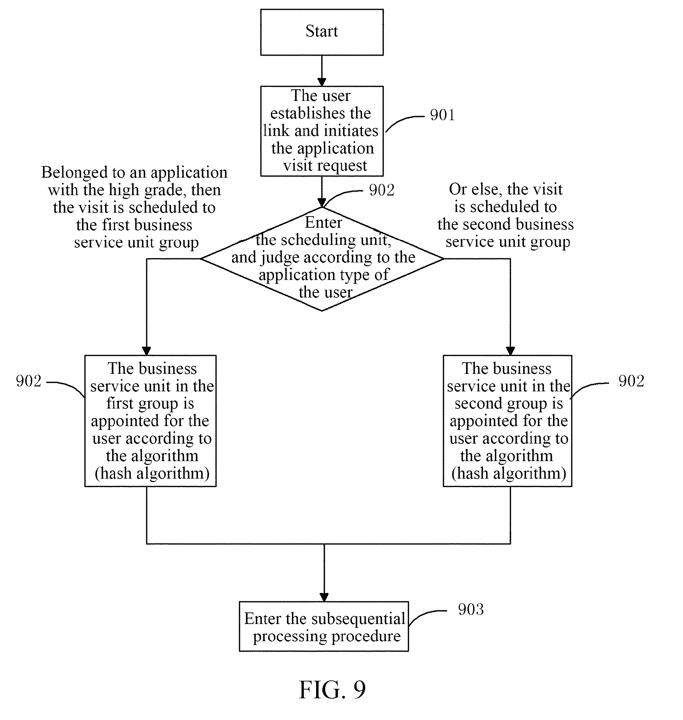

FIG. 9 is a diagram of a business scheduling method based on an application type of a user of a CDN and network convergence device according to an embodiment of the present invention. The operation steps are described as follows.

In step 901, after the user establishes the application link with the business access unit of the CDN business unit, the application visit request is initiated.

Different applications have different requirement on the network quality and the speed and performance of the content delivery; for example, the requirement of the network video business on the network quality and the speed of the content delivery is high, while the requirement from the File Transfer Protocol (FTP) download and the Peer-to-Peer (P2P) download is lower, therefore the priority division and scheduling can be performed according to the type of the application.

In step 902, when the user initiates the application visit request, the judging and scheduling unit perform judgment according to the application type of the user; if it is the application with the high priority, such as, the online video business, then the visit is scheduled to the first business service unit group, and then the business service unit in the group is appointed for the user according to its own scheduling algorithm, such as, the hash algorithm in the first business service unit group; if it is the application with normal priority, then it is judged as the normal application, and the visit is scheduled to the second business service unit group, and then the business service unit in the group is appointed for the user according to its own scheduling algorithm, such as, the hash algorithm in the second business service unit group.

In step 903, after the business service unit providing the service for the user is confirmed, the subsequent business processing procedure is entered.

In sum, the embodiment of the present invention provides a business scheduling method and system of a CDN and network convergence device, which has the following characteristics at least:
1), the CDN and network convergence device provided in the embodiment of the present invention can provide the network access and bearer services and the content delivery service for the user at the same time;
2), the CDN business unit provided in the embodiment of the present invention can be connected to the external storage device through the iSCSI interface, the FC interface or the FCoE interface, thus being able to expand the storage space of the convergence device greatly;
3), through the business scheduling method of the CDN and the network convergence device provided by the embodiment of the present invention, the processor resources and the storage resources, etc. of the device, are integrated systematically to provide service in the form of the business service unit, forming the service group with the high priority level and the normal service group, which can be scheduled and allocated rationally by the business scheduling system and provides the differentiate business bearer and content delivery service;
4), the embodiment of the present invention further provide a method of scheduling the business and balancing the load based on the URL visited by the user, the type of the user, the source IP address and the port number of the user and the application type of the user, which can expand the storage capacity of the convergence device heavily, and provide the differentiate content delivery business and the high-efficiently ability for organizing and using the device, and improves the bearer efficiency of the business.

The above description is only the preferred embodiments of the present invention and is not intended to limit the present invention. The present invention can have a variety of other embodiments. Those skilled in the art can make the corresponding modifications and variations according to the present invention without departing from the spirit and essence of the present invention. And all of these modifications or the variations should be embodied in the scope of the appending claims of the present invention.

Obviously, it can be understood by those skilled in the art that each module or each step above-mentioned in the present invention can be implemented by the universal calculating apparatus, and they can be integrated in a single calculating apparatus, or distributed in the network made up by a plurality of calculating apparatus. Alternatively, they can be implemented by the executable program codes of the calculating apparatus. Accordingly, they can be stored in the storage apparatus and implemented by the calculating apparatus, and in some situation, the shown or described steps can be executed according to a sequence different from this place, or they are made to each integrated circuit module respectively, or a plurality of modules or steps therein are made into the single integrated circuit module to be implemented. This way, the present invention is not limit to any specific form of the combination of the hardware and software.

### Industrial Applicability

In the technical scheme of the embodiment of the present invention, the convergence device can integrate the internal and external storage resources and the business processing capacity, and perform scheduling and processing to the application of the user uniformly; which realizes flexible provision of the business, provides the differentiate service to the user and optimizes the efficiency of the business scheduling.

## Claims

1. A business scheduling method, applied to a convergence device comprising a content delivery network (CDN) business unit providing a content delivery service and a network business unit providing network access and bearing services, wherein,
the CDN business unit comprises a business processor, an internal storage device and an external storage device, and the CDN business unit is connected to the external storage device; and the method comprises:
dividing business processor resources and storage resources in the CDN business unit into multiple business service unit groups, and allocating the business processor resources and the storage resources in the internal storage device or the external storage device to each business service unit group; and
when the CDN business unit receives an application visit request from a user, scheduling the application visit request from the user to one business service unit group of the multiple business service unit groups according to attribute of the user, visited content, an application type or a source internet protocol (IP) address and/or port number.

2. The method according to claim 1, wherein:
the CDN business unit is connected with the external storage device through an internet small computer system interface (iSCSI interface), a fiber channel (FC) interface or an Ethernet fiber channel (FCoE) interface.

3. The method according to claim 1, further comprising:
after scheduling the application visit request of the user to one business service unit group of the multiple business service unit groups, determining a business service unit providing service for the user in the business service unit group according to a scheduling algorithm;
wherein, the business service unit comprises: a business processing unit in the business processor, and a storage unit in the internal storage device or the external storage device.

4. The method according to claim 1, 2 or 3, wherein:
the dividing business processor resources and storage resources in the CDN business unit into multiple business service unit groups, and allocating the business processor resources and the storage resources in the internal storage device or the external storage device to each business service unit group comprises:
dividing the business processor resources and the storage resources in the CDN business unit into a first business service unit group and a second business service unit group, allocating internal storage resources for the first business service unit group, allocating external storage resources for the second business service unit group, and allocating more business processor resources for the first business service unit group.

5. The method according to claim 4, wherein:
scheduling the application visit request from the user to one business service unit group of the multiple business service unit groups according to attribute of the user, visited content, an application type or a source internet protocol (IP) address and/or port number comprises:
when the CDN business unit receives the application visit request from the user, scheduling an application visit request of a user with a higher priority into the first business service unit group according to a preset priority of the attribute of the user, visited content, application type, or source IP address and/or port number.

6. A business scheduling apparatus, applied to a convergence device comprising a content delivery network (CDN) business unit providing a content delivery service and a network business unit providing network access and bearing services, wherein,
the apparatus comprises: a business access unit and a judging and scheduling unit;
the business access unit is configured to: receive an application visit request of a user, and send the application visit request of the user to the judging and scheduling unit; and
the judging and scheduling unit is configured to: divide business processor resources in the CDN business unit and storage resources in an internal storage device and an external storage device into multiple business service unit groups, and allocate the business processor resources and the storage resources in the internal storage device or the external storage device to each business service unit group; and when an application visit request of the user is received, schedule the application visit request of the user to one business service unit group of the multiple business service unit groups according to attribute of the user, visited content, an application type or a source internet protocol (IP) address and/or a port number.

7. The apparatus according to claim 6, wherein:
the judging and scheduling unit is configured to: divide the business processor resources and the storage resources in the CDN business unit into a first business service unit group and a second business service unit group, allocate internal storage resources for the first business service unit group, allocate external storage resources for the second business service unit group, and allocate more business processor resources for the first business service unit group than those for the second business service unit group.

8. The apparatus according to claim 7, wherein:
the judging and scheduling unit is configured to: when the application visit request of the user is received, schedule an application visit request of a user with a higher priority into the first business service unit group according to a preset priority of the attribute of the user, visited content, application type, or source IP address and/or port number.

9. The apparatus according to claim 6, 7 or 8, wherein:
the judging and scheduling unit is further configured to: after scheduling the application visit request of the user to one business service unit group of the multiple business service unit groups, determine a business service unit providing service for the user in the business service unit group according to a scheduling algorithm;
wherein, the business service unit comprises: a business processing unit in the business processor, and a storage unit in the internal storage device or the external storage device.

10. The apparatus according to claim 6, 7 or 8, wherein:
the business access unit is further configured to: provide a content delivery business to the user by adopting a uniform outgoing service address and establish an application link with a user terminal.

11. A convergence device, comprising: a network business unit, a content delivery network (CDN) business unit and a main switching unit; wherein:
the network business unit is configured to: provide network access and bearing services to a user;
the CDN business unit is configured to: provide a content delivery service to the user;
the main switching unit is configured to: control and switch data; and
the CDN business unit comprises the business scheduling apparatus as described in any one of claims 6 to 10.

12. The convergence device according to claim 11, wherein:
the CDN business unit further comprises: a user state maintenance unit; and
the user state maintenance unit is configured to: maintain a connection state and a content delivery state of a user, comprising information about attribute of the user, visited content and content delivery state which the user is in.
